# EUROPEAN PATENT SPECIFICATION

(11) **EP 4 445 708 B1**
(45) Date of publication and mention of the grant of the patent: **08.04.2026**
(21) Application number: 22910714.9
(22) Date of filing: 21.11.2022
(51) Int. Cl.: G05D 1/242, A01B 69/04, G01S 17/42, G01S 17/86, G01S 17/931, G05D 1/243, G05D 105/15, G05D 1/622, G05D 107/20, G05D 109/10, G05D 111/10, G06V 10/141, G06V 10/56, G06V 20/58, A01B 69/00

(54) **OBSTACLE DETECTION SYSTEM, AGRICULTURAL MACHINE AND OBSTACLE DETECTION METHOD**
HINDERNISERKENNUNGSSYSTEM, LANDWIRTSCHAFTLICHE MASCHINE UND HINDERNISERKENNUNGSVERFAHREN
SYSTÈME DE DÉTECTION D'OBSTACLE, MACHINE AGRICOLE ET PROCÉDÉ DE DÉTECTION D'OBSTACLE

(30) Priority: 24.12.2021 JP 2021210793
(43) Date of publication of application: 16.10.2024
(73) Proprietor: Kubota Corporation, Osaka 556-8601 (JP)
(72) Inventor: FUJIWARA, Nagahiro, Sakai-shi, Osaka 590-0908 (JP); MIYASHITA, Shunsuke, Sakai-shi, Osaka 590-0908 (JP)
(74) Representative: Cabinet Beau de Loménie
(86) International application number: PCT/JP2022/043045
(87) International publication number: WO 2023/119996

(56) References cited:
- CN-B- 104 765 366
- CN-U- 212 556 197
- JP-A- 2019 152 924
- JP-A- 2021 006 011
- JP-A- 2021 015 340
- JP-A- 2021 094 118
- JP-A- 2021 113 767
- US-A1- 2019 098 825
- US-A1- 2021 000 006

## Description

### TECHNICAL FIELD

The present disclosure relates to obstacle detection systems for agricultural machines to perform self-driving, agricultural machines including such obstacle detection systems, and obstacle detection methods.

### BACKGROUND ART

Research and development has been directed to the automation of agricultural machines. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields. Patent Document 1 discloses a system to cause unmanned work vehicles to automatically travel between two fields separated from each other with a road being sandwiched therebetween. Patent Document 2 discloses a harvester which can automatically travel and detects an obstacle in fields by images captured by stereo camera units.
CN 104 765 366 B deals with a service robot achieving intelligent obstacle surmounting.

### CITATION LIST

### PATENT LITERATURE

[Patent Document 1] Japanese Laid-Open Patent Publications No. 2021-029218
[Patent Document 2] Japanese Laid-Open Patent Publications No. 2020-178659

### SUMMARY OF INVENTION

### TECHNICAL PROBLEM

When an agricultural machine performs self-driving, it is required to detect obstacles with good accuracy while reducing the processing load for obstacle detection.

The present disclosure provides systems to detect obstacles for agricultural machines to perform self-driving, which can detect obstacles with good accuracy while reducing the processing load for obstacle detection.

### SOLUTION TO PROBLEM

An obstacle detection system according to an embodiment of the present invention is defined in claim 1, and is an obstacle detection system for an agricultural machine to perform self-driving while sensing a surrounding environment with a LiDAR sensor and a camera, the obstacle detection system comprising: a controller causing the camera upon detecting an obstacle candidate based on data that is output from the LiDAR sensor, as a trigger, to acquire an image of the obstacle candidate, and determining whether or not to change a traveling status of the agricultural machine based on the image of the obstacle candidate acquired with the camera.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to embodiments of the present disclosure, systems to detect obstacles for agricultural machines to perform self-driving, which can detect obstacles with good accuracy while reducing the processing load for obstacle detection are provided.

### BRIEF DESCRIPTION OF DRAWINGS

[FIG. 1] FIG. 1 is a diagram providing an overview of an agriculture management system according to an illustrative embodiment of the present disclosure.
[FIG. **2]** FIG. **2** is a side view schematically showing an example of a work vehicle and an example of an implement that is linked to the work vehicle.
[FIG. **3]** FIG. **3** is a block diagram showing an example configuration of the work vehicle and the implement.
[FIG. **4]** FIG. **4** is a conceptual diagram showing an example of the work vehicle performing positioning based on an RTK-GNSS.
[FIG. **5]** FIG. **5** is a diagram showing an example of an operational terminal and an example of operation switches disposed in a cabin.
[FIG. **6]** FIG. **6** is a block diagram showing an example of hardware configuration of a management device and a terminal device.
[FIG. **7]** FIG. **7** is a diagram schematically showing an example of the work vehicle automatically traveling along a target path inside a field.
[FIG. **8]** FIG. **8** is a flowchart showing an example operation of steering control during self-driving.
[FIG. **9A]** FIG. **9A** is a diagram showing an example of the work vehicle traveling along a target path **P.**
[FIG. **9B]** FIG. **9B** is a diagram showing an example of the work vehicle at a position which is shifted rightward from the target path **P.**
[FIG. **9C**] FIG. **9C** is a diagram showing an example of the work vehicle at a position which is shifted leftward from the target path **P.**
[FIG. **9D**] FIG. **9D** is a diagram showing an example of the work vehicle oriented in an inclined direction with respect to the target path **P.**
[FIG. **10**] FIG. **10** is a diagram schematically showing an example state where a plurality of the work vehicles perform self-traveling inside a field and on a road outside the field.
[FIG. **11A]** FIG. **11A** is a diagram schematically showing an example of a region that LiDAR sensors of the work vehicle can sense.
[FIG. **11B]** FIG. **11B** is a diagram schematically showing an example of a region that LiDAR sensors of the work vehicle can sense.
[FIG. **12A]** FIG. **12A** is a diagram schematically showing an example traveling state of the work vehicle using the obstacle detection system.
[FIG. **12B]** FIG. **12B** is a diagram schematically showing an example traveling state of the work vehicle using the obstacle detection system.
[FIG. **12C]** FIG. **12C** is a diagram schematically showing an example traveling state of the work vehicle using the obstacle detection system.
[FIG. **13]** FIG. **13** is a diagram schematically showing an example traveling state of the work vehicle using the obstacle detection system.
[FIG. **14]** FIG. **14** a flowchart showing an example of steps for the controller to detect an obstacle.
[FIG. **15]** FIG. **15** a flowchart showing an example of steps for the controller to detect an obstacle.
[FIG. **16]** FIG. **16** is a diagram showing the size (height and width) of an object (detected object) sensed by the LiDAR sensors.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may control at least one of: steering that is required in the movement of the agricultural machine; adjustment of the moving speed, or beginning and ending of a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information representing the time and the date when each of the tasks of agricultural work is to be performed. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device". The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (automobiles, trucks, buses, etc.) are also allowed to travel. The work vehicles may automatically travel on a general road in addition to an agricultural road. The "general road" is a road maintained for traffic of general vehicles.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc., which are indicated in the following embodiments are only exemplary, and admit of various modifications so long as it makes technological sense. Any one implementation may be combined with another so long as it makes technological sense to do so.

Hereinafter, embodiments in which techniques according to the present disclosure are applied to work vehicles, such as tractors, which are examples of agricultural machines, will be mainly described. The techniques according to the present disclosure are also applicable to other types of agricultural machines in addition to the work vehicle such as a tractor.

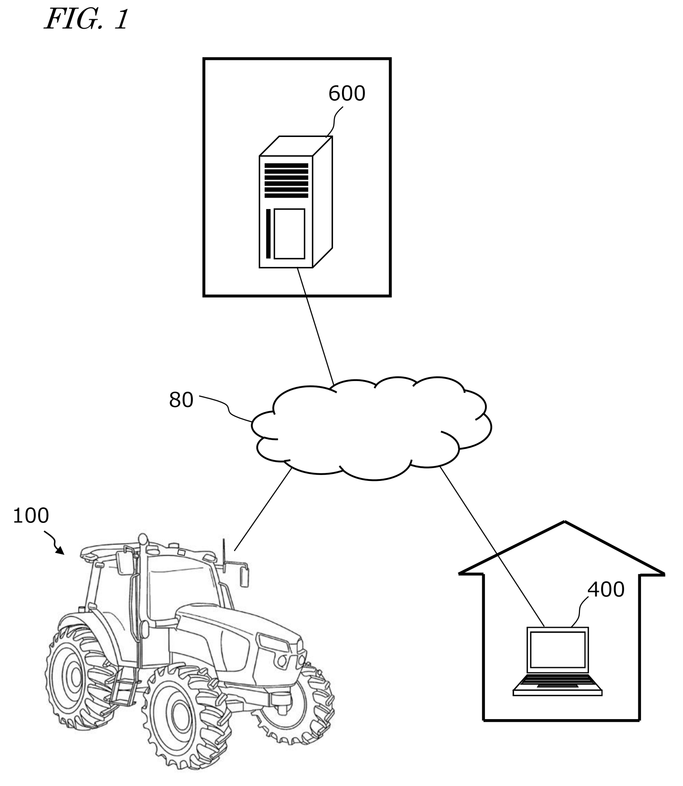

FIG. **1** is a diagram providing an overview of an agriculture management system according to an illustrative embodiment of the present disclosure. The agriculture management system shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system. The work vehicle **100,** the terminal device **400** and the management device **600** can communicate with each other via the network **80.** FIG. **1** shows one work vehicle **100,** but the agriculture management system may include a plurality of the work vehicles or any other agricultural machine.

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or a LiDAR sensor. Based on the position of the work vehicle **100** and information on a target path, the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). The work vehicle **100** automatically travels along the road outside the field by utilizing data that is output from a sensing device, such as a camera or a LiDAR sensor.

The management device **600** is a computer to manage the agricultural work performed by the work vehicle **100.** The management device **600** may be, for example, a server computer that performs centralized management on information regarding the field on the cloud and supports agriculture by use of the data on the cloud. The management device **600,** for example, creates a workplan for the work vehicle **100** and causes work vehicle **100** to perform agricultural work in accordance with the work plan. The management device **600** generates a target path inside the field based on, for example, information input by the user by use of the terminal device **400** or any other device. In addition, the management device **600** may generate or edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The terminal device **400** is a computer that is used by a user who is at a remote place from the work vehicle **100.** The terminal device **400** shown in FIG. 1 is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The terminal device **400** can also display, on the display screen thereof, a setting screen allowing the user to input information necessary to create a work plan (e.g., a schedule of each task of agricultural work) for the work vehicle **100.** When the user inputs necessary information to the setting screen and performs a manipulation to transmit the information, the terminal device **400** transmits the input information to the management device **600.** The management device **600** creates a work plan based on the information. The terminal device **400** may further have a function of displaying, on a display screen thereof, a setting screen allowing the user to input information necessary to set a target path.

Hereinafter, a configuration and an operation of the system according to the present embodiment will be described in more detail.

### [1. Configuration]

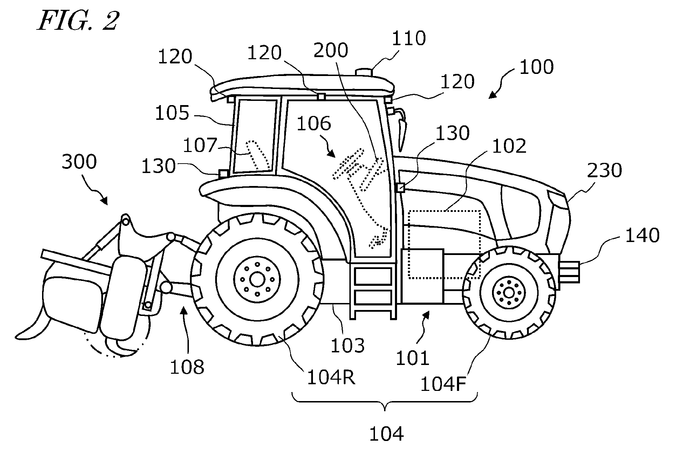

FIG. **2** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, the front wheels **104F** and/or the rear wheels **104R** may be replaced by a plurality of wheels (crawlers) to which a continuous track is attached, instead of tire-mounted wheels.

The work vehicle **100** includes at least one sensing device sensing the surroundings of the work vehicle **100.** In the example shown in FIG. **2****,** the work vehicle **100** includes a plurality of sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.**

The LiDAR sensor **140** in the example shown in FIG. **2** is disposed on a bottom portion of a front surface of the vehicle body **101.** The LiDAR sensor **140** may be disposed at any other position. For example, the LiDAR sensor **140** may be disposed on the top portion of the cabin **105.** The LiDAR sensor **140** may be a 3D-LiDAR sensor, but also a 2D-LiDAR sensor. The LiDAR sensor **140** senses the surrounding environment of the work vehicle **100** and outputs the sensing data. While the work vehicle **100** is traveling, the LiDAR sensor **140** repeatedly outputs sensor data representing the distance and the direction between an object existing in the surrounding environment thereof and each of measurement points, or a two-dimensional or three-dimensional coordinate values of each of the measurement points. The sensor data that is output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles in the surroundings of the work vehicle **100** during self-traveling to cause the work vehicle **100** to halt or detour around the obstacles. The LiDAR sensor **140** may be used as one of the obstacle sensors **130.** Further, as described later, the LiDAR sensor **140** and the cameras **120** may be used in cooperation as sensors to detect the obstacle.

The work vehicle **100** further includes a GNSS unit **110.** The GNSS unit **110** includes a GNSS receiver. The GNSS receiver may include an antenna to receive a signal (s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensing data acquired with the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** or the LiDAR sensor **140** and on an environment map that is previously stored in the storage device. By correcting or complementing position data based on the satellite signals using the data acquired with the cameras **120** or the LiDAR sensor **140,** it becomes possible to identify the position of the work vehicle **100** with a higher accuracy.

The work vehicle **100** further includes one or more lighting devices **230.** In FIG. **2****,** only one lighting device **230** is exemplified, however, various lighting devices **230** such as headlights, work lights, and clearance lights may be provided at a plurality of positions of the work vehicle **100.** These lighting devices **230** are controlled by the controller.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the steered wheels, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front of the vehicle body **101.** In that case, the implement can be connected at the front of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote operation by a user.

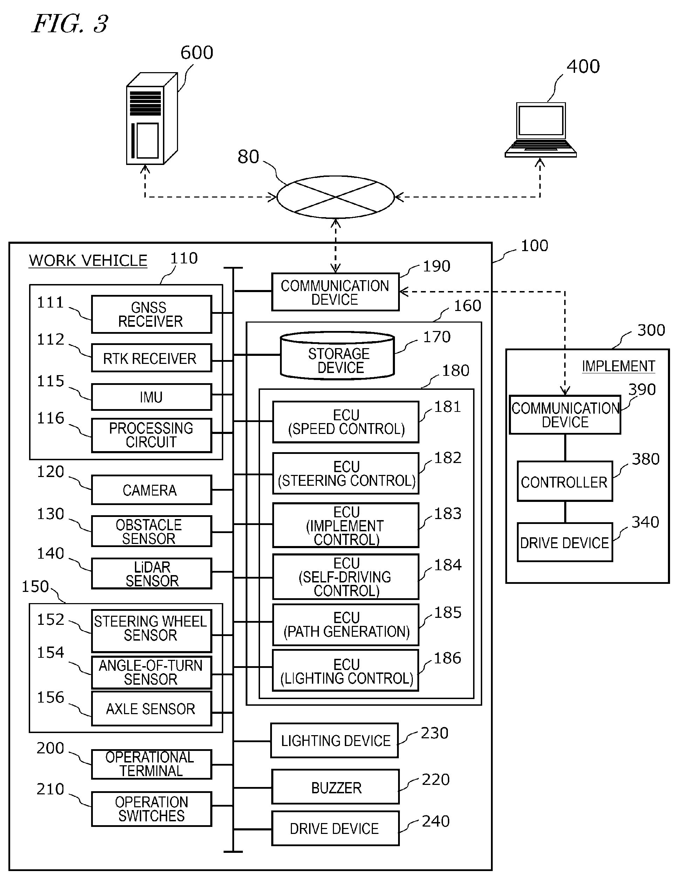

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140,** the operational terminal **200,** and the lighting device **230,** the work vehicle **100** in the example of FIG. **3** includes sensors **150** to detect the operating status of the work vehicle **100,** a control system **160,** a communication device **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a storage device 170 and a controller **180.** The controller 180 includes a plurality of electronic control units (ECU) 181 to **186.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the azimuth angle, and a value representing the reception strength of each of the satellites from which the satellite signals are received.

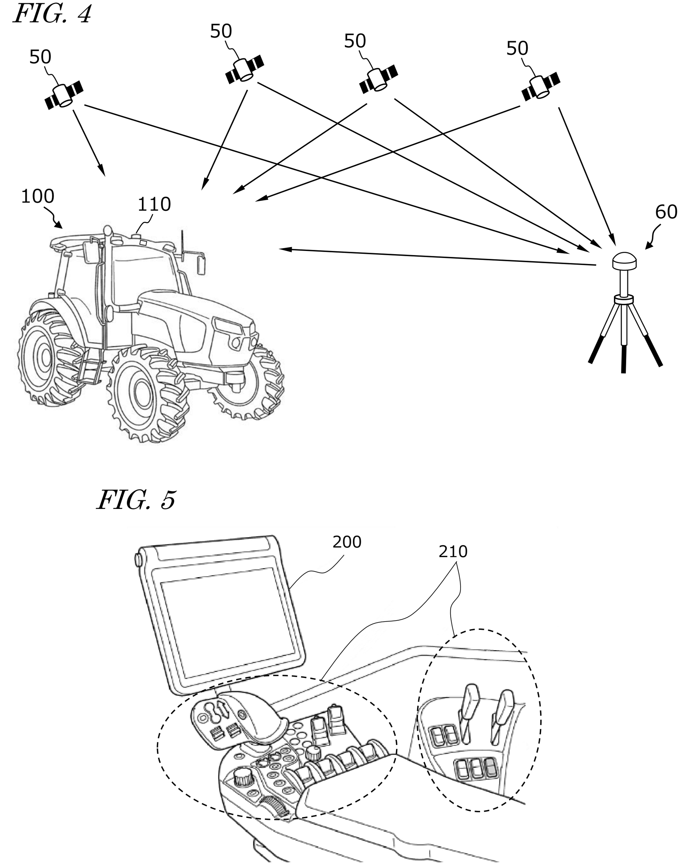

The GNSS unit **110** shown in FIG. **3** performs positioning of the work vehicle **100** by utilizing an RTK (Real Time Kinematic) -GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data that is output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera (s) to generate visible light images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime.

The obstacle sensors **130** detect objects existing in the surroundings of the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The angle-of-turn sensor **154** measures the angle of turn of the front wheels **104F,** which are the steered wheels. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a target path for self-driving. The environment map includes information on a plurality of fields where the work vehicle **100** performs agricultural work and roads around the fields. The environment map and the target path may be generated by a processor in the management device **600.** The controller **180** may have a function of generating or editing an environment map and a target path. The controller **180** can edit the environment map and the target path, acquired from the management device **160,** in accordance with the environment where the work vehicle **100** travels. The storage device **170** also stores data on a work plan received by the communication device **190** from the management device **600.** The work plan includes information on a plurality of tasks of agricultural work to be performed by the work vehicle **100** over a plurality of working days.

The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, the ECU **185** for path generation, and the ECU **186** for lighting control.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140** and the sensors **150,** the ECU **184** performs computation and control for achieving self-driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired with the cameras **120** or the LiDAR sensor **140.** Use of the data acquired with the cameras **120** or the LiDAR sensor **140** allows the accuracy of the positioning to be further improved. Outside the field, the ECU **184** estimates the position of the work vehicle **100** by use of the data output from the LiDAR sensor **140** or the cameras **120.** For example, the ECU **184** may estimate the position of the work vehicle **100** by matching the data output from the LiDAR sensor **140** or the cameras **120** against the environment map. During self -driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

During travel of the work vehicle **100,** the ECU **185** recognizes an obstacle existing in the surroundings of the work vehicle **100** based on the data output from the cameras **120,** the obstacle sensors **130** and the LiDAR sensor **140.** The ECU **185** may also determine a destination of the work vehicle **100** based on the work plan stored in the storage device **170,** and determine a target path from a beginning point to a target point of the movement of the work vehicle **100.**

The ECU **186** controls the illumination and extinction of each lighting device **230.** ECU **186** may be configured to adjust the light output (e.g., luminous intensity) of each lighting device **230.** The ECU **186** may adjust the light output of the lighting device **230** by changing the driving voltage or driving current that is input to the lighting device **230.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network). Instead of the CAN, faster communication methods such as Automotive Ethernet (registered trademark) may be used. Although the ECUs **181** to **186** are illustrated as individual blocks in FIG. **3****,** the function of each of the ECU **181** to **186** may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a part of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. **5** is a diagram showing an example of the operational terminal **200** and an example of the operation switches **210** both provided in the cabin **105.** In the cabin **105,** the operation switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. **3** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** can be transmitted from the communication device **390** to the work vehicle **100.**

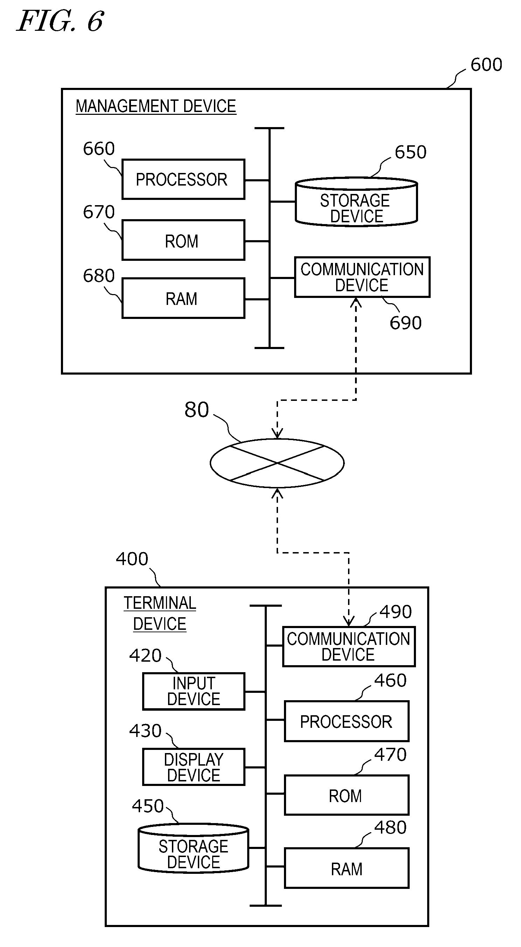

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map. The environment map may be distributed from a computer external to the management device **600.**

The communication device **690** is a communication module to communicate with the work vehicle **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD). An example of the semiconductor storage device is a solid state drive (SSD) . The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the work vehicle **100,** the terminal device **400** and the management device **600** will be described.

### [2-1. Self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle by the obstacle sensors **130** (or based on data that is output from the LiDAR sensor **140** and the cameras **120)** thereof while traveling inside the field, the work vehicle **100,** for example, may halt traveling and perform operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** utilizes the data acquired by the cameras **120** or the LiDAR **140.** When an obstacle is detected outside the field, the work vehicle **100,** for example, avoids the obstacle or halts at the point. Outside the field, the position of the work vehicle **100** can be estimated based on data output from the LiDAR sensor **140** or the cameras **120** in addition to positioning data output from the GNSS unit **110.**

Hereinafter, an example of the operation of the work vehicle **100** performing self-traveling inside the field will be described.

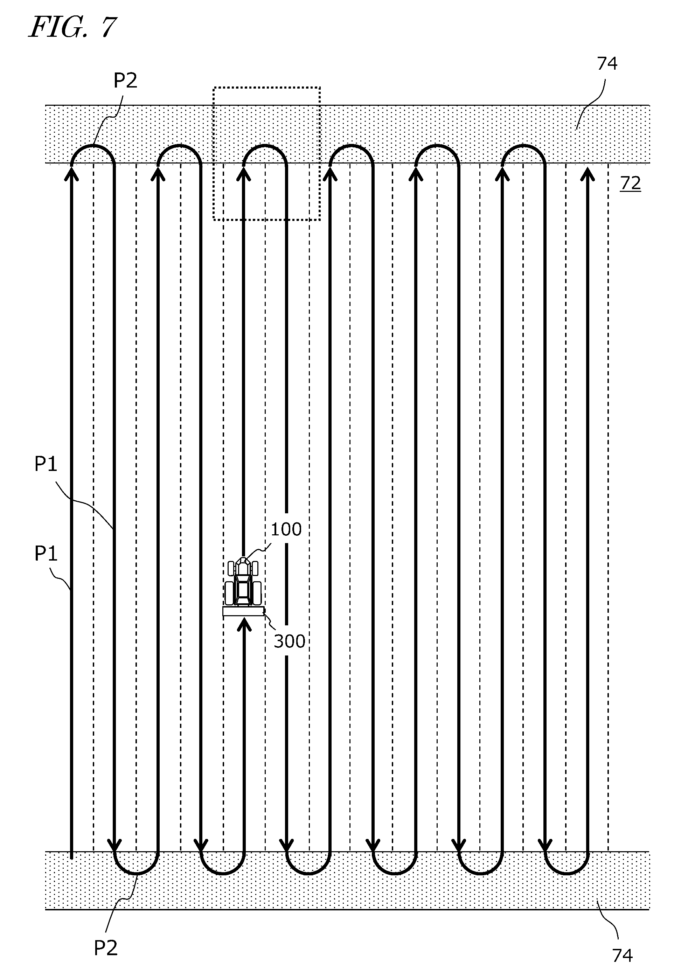

FIG. **7** is a diagram schematically showing an example of the work vehicle **100** automatically traveling along a target path in a field. In this example, the field includes a work area **72,** in which the work vehicle **100** performs work by using the implement **300,** and headlands **74,** which are located near outer edges of the field. The user may previously specify which regions of the field on the map would correspond to the work area **72** and the headlands **74.** The target path in this example includes a plurality of main paths **P1** parallel to each other and a plurality of turning paths **P2** interconnecting the plurality of main paths **P1**. The main paths **P1** are located in the work area **72,** whereas the turning paths **P2** are located in the headlands **74.** Although each of the main paths **P1** in FIG. **7** is illustrated as a linear path, each main path **P1** may also include a curved portion(s). Broken lines in FIG. **7** depict the working breadth of the implement **300.** The working breadth is previously set and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field, for example. Along the target path shown in FIG. **7****,** the work vehicle **100** automatically travels while repeating a reciprocating motion from a beginning point of work to an ending point of work. Note that the target path shown in FIG. **7** is merely an example, and the target path may be arbitrarily determined.

Now, an example control by the controller **180** during self-driving inside the field will be described.

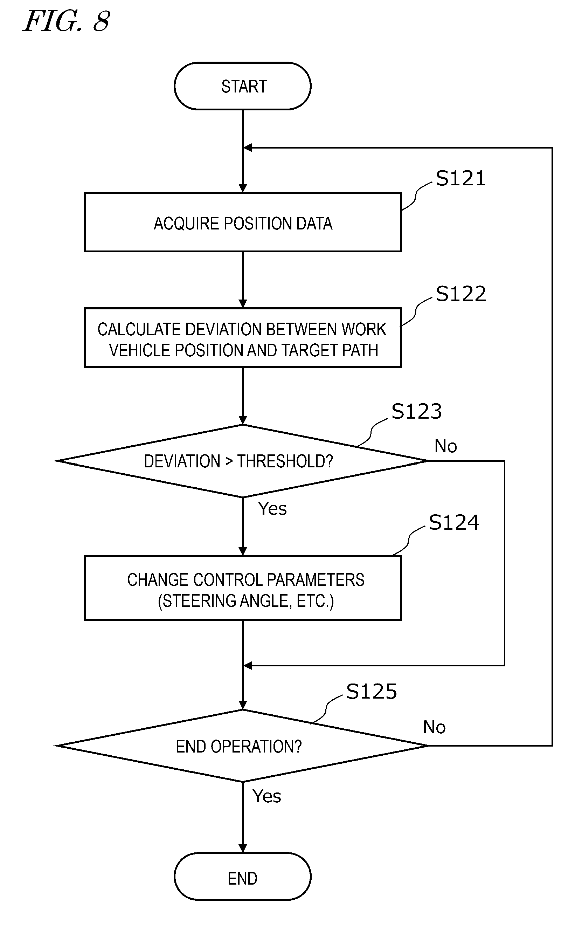

FIG. **8** is a flowchart showing an example operation of steering control to be performed by the controller **180** during self -driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the GNSS unit **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self -driving be suspended through remote operations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

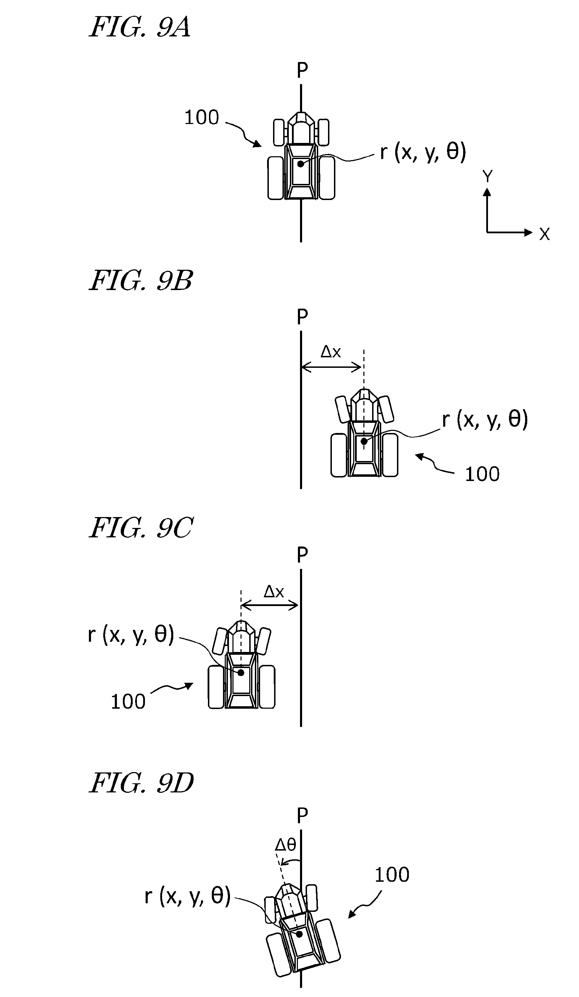

Hereinafter, with reference to FIGS. **9A** to **9D****,** an example of steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** is a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** (or based on data that is output from the LiDAR sensor **140** and the cameras **120)** during travel, the controller **180,** for example, halts the work vehicle **100.** At this point, the controller **180** may cause the buzzer **220** to present an alarm sound or may transmit an alert signal to the terminal device **400.** In the case where the obstacle is avoidable, the controller **180** may generate a local path that allows for avoiding the obstacle and control the drive device **240** such that the work vehicle **100** travels along the path.

The work vehicle **100** according to the present embodiment can perform self-traveling outside a field as well as inside the field. Outside the field, the controller **180** is able to detect an object located at a relatively distant position from the work vehicle **100** (e.g., another vehicle, a pedestrian, etc.) based on data output from the cameras **120** or the LiDAR sensor **140.** The controller **180** performs speed control and steering control to avoid the detected obstacle. In this manner, self - traveling on a road outside the field can be realized.

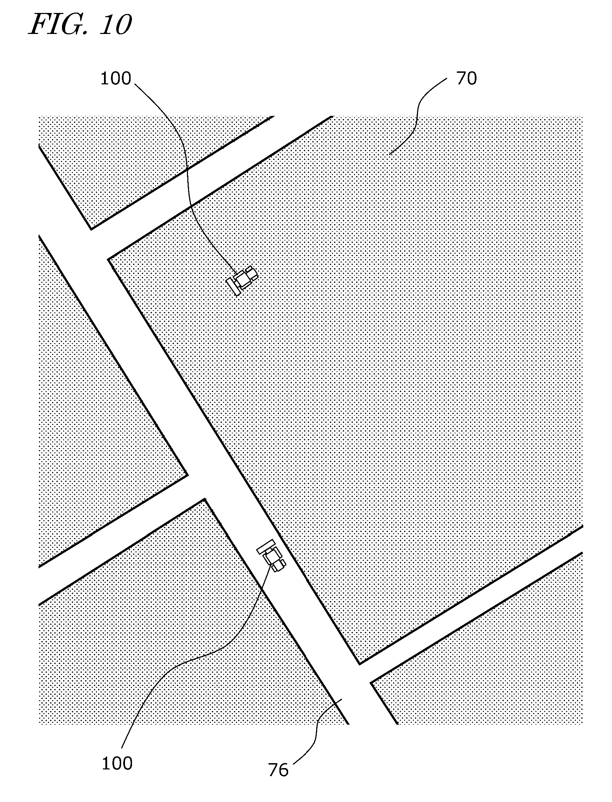

As described above, the work vehicle **100** according to the present embodiment can automatically travel inside the field and outside the field in an unmanned manner. FIG. **10** is a diagram schematically showing an example of state where a plurality of the work vehicles **100** are performing self-traveling inside a field **70** and on a road **76** outside the field **70.** In the storage device **170,** an environment map of a region including a plurality of fields and roads around the fields, and a target path, are recorded. The environment map and the target path may be generated by the management device **600** or the ECU **185.** In the case of traveling on a road, the work vehicle **100** travels along the target path while sensing the surroundings thereof by use of the sensing devices such as the cameras **120** and the LiDAR sensor **140,** with the implement **300** being raised.

### [2-2. Obstacle detection]

The controller **180** of the work vehicle **100** according to the present embodiment functions as an obstacle detection system for the work vehicle **100** in cooperation with a LiDAR sensor(s) **140** and a camera(s) **120.**

The work vehicle **100** performs self-driving while sensing the surrounding environment with a LiDAR sensor(s) **140** and a camera(s) **120.** The work vehicle **100** has one or more LiDAR sensors **140** and one or more cameras **120,** and performs self-driving while sensing the surrounding environment with at least one LiDAR sensor **140** and at least one camera **120** among them. Upon detecting, as a trigger, a candidate of an obstacle (hereinafter, "obstacle candidate") based on data that is output (e.g., point cloud data) from the LiDAR sensor(s) **140,** the controller **180** causes the camera (s) **120** to acquire an image (e.g., a color image) of the obstacle candidate. The controller **180** further determines whether or not to change the traveling status of the work vehicle **100** based on the image of the obstacle candidate acquired with the camera(s) **120.**

The "traveling status" of the work vehicle **100** is defined by parameters such as the speed, acceleration, and traveling direction of the work vehicle **100.** The parameters determining the "traveling status" of the work vehicle **100** may include the target path of the work vehicle **100,** and may include positional and directional information of each of a plurality of waypoints defining the target path. Changing the traveling status of the work vehicle **100** refers to changing at least one of the parameters defining the traveling status of the work vehicle **100.** Changing the traveling status of the work vehicle **100** includes, for example, decelerating the work vehicle **100,** halting the travel of the work vehicle **100,** and changing the target path of the work vehicle **100.** "Changing the traveling status of the work vehicle **100"** is not limited to changing the current state of the work vehicle **100** (e.g., speed, acceleration, traveling direction, etc.), but also includes changing the future state of the work vehicle **100** (e.g., speed, acceleration, traveling direction, etc.) by changing the target path of the work vehicle **100** although the current state of the work vehicle **100** remains unchanged.

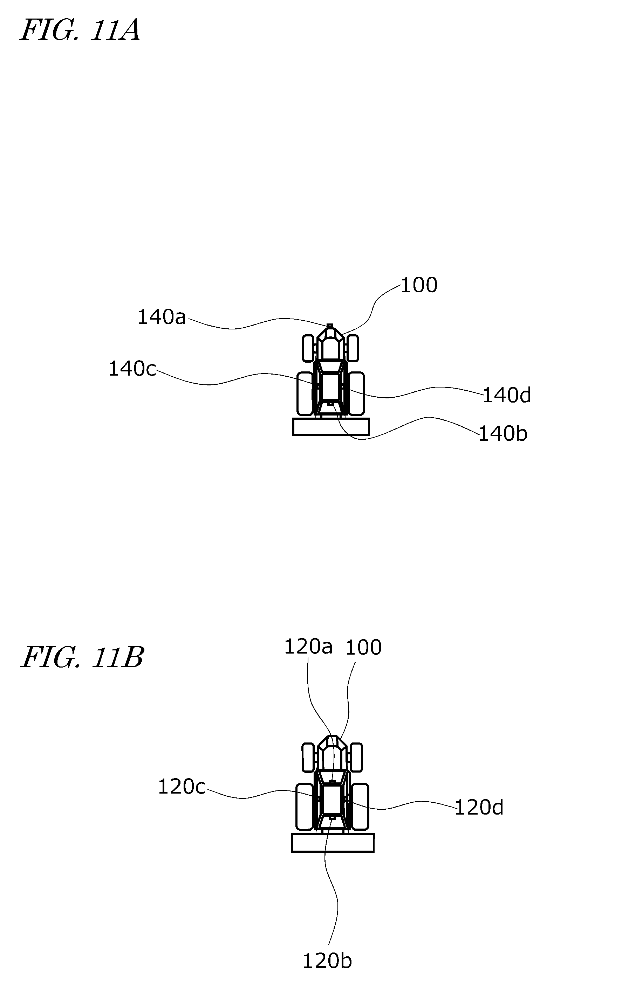

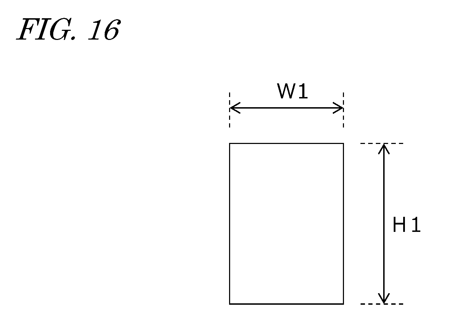

An "obstacle" is a subject with respect to which the traveling status of the work vehicle **100** should be changed, for instance, in order to avoid contact (including collision) with or approach to it. The subject that can be an obstacle is not limited to objects (including land objects, persons, animals, etc.), but can also include concavities or convexities formed on the ground surface. The obstacle also includes a stationary obstacle and a movable obstacle. The controller **180** detects any subject that can be an obstacle for the work vehicle **100** as an "obstacle candidate" based on data output from the LiDAR sensor(s) **140** within the range sensed by the LiDAR sensor(s) **140.** The criteria for the controller **180** to detect obstacle candidates can be set in advance. For example, as shown in FIG. **16****,** the controller **180** refers to the size (height **H1,** width **W1)** of an object (a detected object) sensed by the LiDAR sensor (s) **140,** and if the size (height **H1,** width **W1)** of the detected object is larger than or equal to the decision value, the controller **180** detects the object as the obstacle candidate. For example, the controller **180** can set the largest value of height of the detected object as the height **H1** and the largest value of width of the detected object as the width **W1.** The decision value can be set only for either the object height or width, or for both the object height and width. The decision value, for example, is predetermined and stored in the storage device **170** of the work vehicle **100.** The decision value can be set by the user operating the operational terminal **200** and the terminal device **400** and stored. The decision value can vary depending on the distance from the LiDAR sensor(s) **140** to the detected object. For example, the controller **180** sets a smaller decision value as the distance from the LiDAR sensor(s) **140** to the detected object increases, and a larger decision value as the distance from the LiDAR sensor(s) **140** to the detected object decreases. Therefore, the shorter the distance from the LiDAR sensor(s) **140** to the detected object is, the larger objects are detected as obstacle candidates; and the longer the distance from the LiDAR sensor(s) **140** to the detected object is, the smaller objects are detected as obstacle candidates. The decision value can vary depending on the range sensed by the LiDAR sensor (s) **140.** For example, as in the example of FIG. **11A** described later, the controller **180** may set differing decision values for the range sensed by the LiDAR sensor **140a,** which senses the front of the work vehicle **100,** and for the range sensed by the LiDAR sensor **140b,** which senses the rear of the work vehicle **100.** For example, the decision value for the range sensed by the LiDAR sensor **140a,** which senses the front of the work vehicle **100,** can be set smaller than the decision value for the range sensed by the LiDAR sensor **140b,** which senses the rear of the work vehicle **100.**

The controller **180** may detect any objects within the range sensed by the LiDAR sensor(s) **140,** excluding the ground surface, as obstacle candidates. Alternatively, the controller **180** may detect any objects within the range sensed by the LiDAR sensor (s) **140,** further excluding any objects recorded on the environment map (objects such as buildings), as obstacle candidates. The controller **180** may detect any objects that are within or near the range which the work vehicle **100** occupies while the work vehicle **100** travels along the target path as obstacle candidates.

FIGS. **11A** and **11B** schematically illustrate examples of the regions in which the LiDAR sensors **140** and the cameras **120** of the work vehicle **100** can sense. In the examples shown in FIGS. **11A** and **11B****,** the work vehicle **100** includes four LiDAR sensors **140 (140a, 140b, 140c,** and **140d)** and four cameras **120 (120a, 120b, 120c,** and **120d)** that are provided at the front, the rear, the left side, and the right side of the work vehicle **100,** and may sense the surrounding environment with them. In FIGS. **11A** and **11B****,** examples of the ranges sensed by the LiDAR sensors **140** and the cameras **120** are shown as gray fans and triangles.

The LiDAR sensor(s) **140** emits pulses of laser beams (hereinafter abbreviated as "laser pulses") one after another while changing the emission direction, and is able to measure a distance to the position of each reflection point based on a time difference between the time of emission and the time when the reflected light of each laser pulse is received (ToF (Time of Flight) method) . Alternatively, the LiDAR sensor(s) **140** may be a sensor (s) using Frequency Modulated Continuous Wave (FMCW) technology to perform ranging. A LiDAR sensor(s) using FMCW technology emits laser light that is linearly modulated in frequency, and is able to calculate a distance to the reflection point and velocity based on the frequency of a beat signal acquired by sensing coherent light between the emitted light and the reflected light. The "reflection point" can be a point on the surface of an object that is located in the surrounding environment of the work vehicle **100.**

The LiDAR sensor(s) **140** can measure the distance from the LiDAR sensor(s) **140** to an object by any method. Examples of measurement methods for the LiDAR sensor (s) **140** are the mechanical rotation method, the MEMS method, and the phased array method. These measurement methods each differ in terms of how laser pulses are emitted (how scanning is performed). For example, a LiDAR sensor based on the mechanical rotation method scans the surrounding environment at 360 degrees in all directions around the rotation axis, by rotating a cylindrical head that performs emission of laser pulses and detection of reflection light of the laser pulses. A LiDAR sensor based on the MEMS method swings the direction of laser pulse emission by using MEMS mirrors and scans the surrounding environment within a predetermined angle range that is centered around the swing axis. A LiDAR sensor based on the phased array method swings the direction of light emission by controlling the light phase and scans the surrounding environment around a predetermined angular range that is centered around the swing axis.

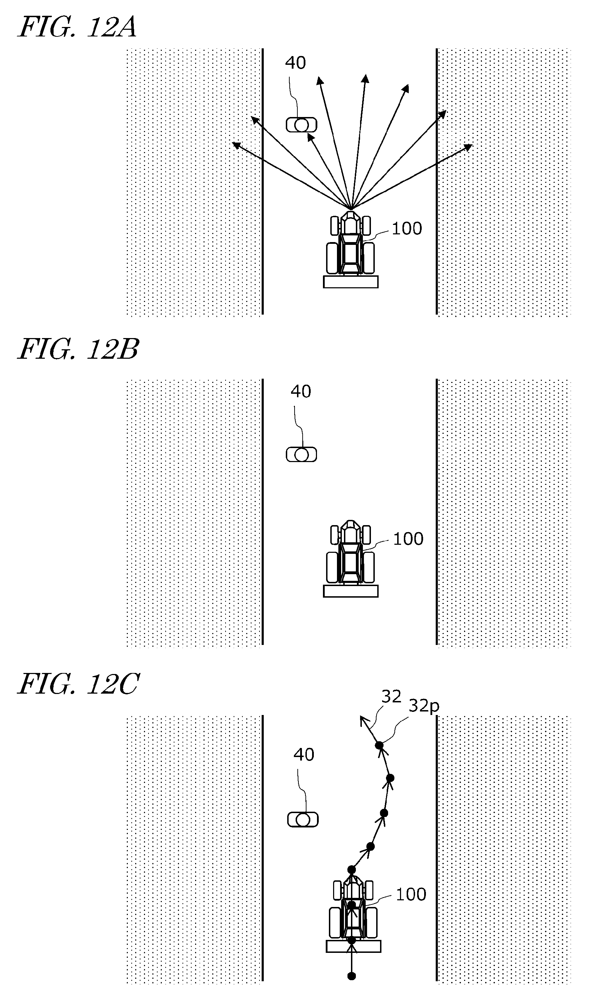

FIGS. **12A, 12B,** and **12C** are diagrams schematically showing examples of the work vehicle **100** traveling by using the obstacle detection system. In the examples of FIGS. **12A, 12B,** and **12C****,** the work vehicle **100** automatically travels on a road outside the field.

As shown in FIG. **12A****,** until an obstacle candidate **40** is detected, the work vehicle **100** is automatically traveling while sensing the surrounding environment with at least one LiDAR sensor **140** and at least one camera **120.** In this example, the work vehicle **100** is automatically traveling while sensing the surrounding environment by using the LiDAR sensor **140a** provided at the front of the work vehicle **100** and the camera **120a** provided at the front of the work vehicle **100.** In FIG. **12A****,** sensing by the LiDAR sensor **140a** is shown schematically with arrows, and the sensing region by the camera **120a** is shown schematically as a gray triangle. The controller **180** detects the obstacle candidate **40** based on data that is output from the LiDAR sensor **140a.** Until the obstacle candidate **40** is detected by the sensing of the LiDAR sensor **140a,** only a limited camera **120a** among the four cameras **120a** to **120d** may be capturing the surrounding environment, while the remaining cameras **120b** to **120d** may not be capturing any images. The remaining cameras **120b** to **120d** may be in sleep mode, for example. Until the obstacle candidate **40** is detected, the controller **180** does not perform any process that uses the image captured by the camera **120a** (i.e., any process for detecting the obstacle candidate).

As shown in FIG. **12B****,** when the obstacle candidate **40** is detected, the controller **180** may selectively use (and activate, if necessary) one or more cameras **120** suitable for capturing the obstacle candidate **40** having been detected, and may have an image of the obstacle candidate **40** captured. The cameras **120** may include an actuator or other mechanisms to change their orientation. The controller **180** may change the orientation of the camera (s) **120** so that the field of view of the selected camera **120** includes the obstacle candidate **40.** In this example, the camera **120c** is activated in addition to the camera **120a,** which was activated before detection of the obstacle candidate **40,** and the cameras **120a** and **120c** are employed to capture the obstacle candidate **40.** At this time, the controller **180** may cause the cameras **120a** and/or **120c** to capture an image of the obstacle candidate **40** at a higher magnification than when capturing the surrounding environment before detection of the obstacle candidate **40.** Alternatively, the controller **180** may cause them to capture an image of the obstacle candidate **40** at a higher resolution than when capturing the surrounding environment before detection of the obstacle candidate **40,** or at a higher frame rate than when capturing the surrounding environment before detection of the obstacle candidate **40.** The controller **180** determines whether or not to change the traveling status of the work vehicle **100** based on the images of the obstacle candidate **40** acquired with the cameras **120a** and **120c.** For example, the controller **180** determines whether or not to change the traveling status of the work vehicle **100** so that the work vehicle **100** avoids contact with or approach to the obstacle candidate **40,** by a recognition processing based on the images of the obstacle candidate **40** acquired with the cameras **120a** and **120c.**

FIG. **12C** shows an example of determining to change the target path of the work vehicle **100** so as to avoid the obstacle candidate **40.** A new target path **32** for the work vehicle **100** is set by a plurality of waypoints **32p** that are newly set so as to avoid the obstacle candidate **40.**

With the obstacle detection system according to the present embodiment, it is possible to detect obstacles with good accuracy while reducing the processing load for obstacle detection. For example, if obstacles are to be detected by constantly using image data, the camera(s) will need to continuously acquire high-quality (high resolution) images, and the processing load for obstacle detection by using image data can be high. The power consumption of the controller performing the process of obstacle detection using image recognition techniques may also increase. When an agricultural machine is monitored or operated remotely, it is necessary to continuously transmit images acquired with the camera(s) via a network while the agricultural machine is traveling, which may increase the amount of communication.

In contrast, according to the obstacle detection system of the present embodiment, the controller **180** detects obstacle candidates based on data that is output from the LiDAR sensor (s) **140,** begins to scrutinize an obstacle candidate with image data only upon detection of the obstacle candidate, and determines whether the obstacle candidate should cause a change in the traveling status of the work vehicle **100** or not. This allows for reducing the processing load for obstacle detection. Because obstacle candidates are detected in advance based on data that is output from the LiDAR sensor(s) **140,** the camera(s) **120** can acquire images while focusing on a necessary range or subjects, which can reduce the processing load for obstacle detection while maintaining the accuracy of obstacle detection. Furthermore, obstacles can be detected with good accuracy using both data that is output from the LiDAR sensor (s) **140** and image data that is captured by the camera (s) **120.** Obstacles can be detected with good accuracy by using both of: data that is output from the LiDAR sensor(s) **140,** which provides a distance to an object and a positional relationship with the object with high accuracy; and image data, which allows for performing object detection by using an image recognition technique. When the work vehicle **100** is being monitored remotely, image data may be transmitted via the network **80** to, for example, the management device **600** or the terminal device **400** only upon detection of an obstacle candidate, whereby an excessive increase in the amount of communication can be suppressed.

"Detecting an obstacle with high accuracy" includes, for example, suppressing misdetection of obstacles, reducing errors in the obstacle positions, reducing failures to detect obstacles which should have been detected, and so on. For example, suppressing misdetection of obstacles can reduce unnecessary changes in the traveling status of the work vehicle **100** (e.g., reduction of traveling speed, halting, change of the target path, etc.) that may be caused by misdetection of obstacles. As a result, the efficiency of movement through automatic travel by the work vehicle **100** and/or agricultural work performed by the work vehicle **100** can be increased.

For example, the controller **180** detects one or more objects in the surrounding environment of the work vehicle **100** based on data that is output from the LiDAR sensor(s) **140.** When the controller **180** determines that the detected object is an obstacle candidate, the controller **180** causes the camera(s) **120** to acquire an image(s) of the obstacle candidate, and determines whether or not to change the traveling status of the work vehicle **100** based on the image(s) acquired with the camera(s) **120.** The controller **180** may determine whether the detected object is an obstacle candidate by referring to an environment map and/or a target path in addition to the data that is output from the LiDAR sensor(s) **140.** The environment map and the target path are stored, for example, in the storage device **170** of the work vehicle **100.** The controller **180** may obtain the environment map and the target path from the management device **600** or the terminal device **400** in determining whether the detected object is an obstacle candidate or not.

The work vehicle **100** exemplified here is a tractor to which an implement is attachable. When the work vehicle **100** has an implement attached thereto, the controller **180** may set the region to be scanned by the LiDAR sensor(s) **140** (i.e. the region to be sensed for detecting an obstacle candidate) based on the type of the attached implement. The shape of the region to be scanned for detecting an obstacle candidate may be set depending on the characteristics of the attached implement (e.g., width, height, weight, or horsepower). The type and/or characteristics of the implement attached to the work vehicle **100** are recorded in, for example, the storage device **170** of the work vehicle **100.** They may be automatically recognized and recorded when the implement becomes connected to the work vehicle **100.**

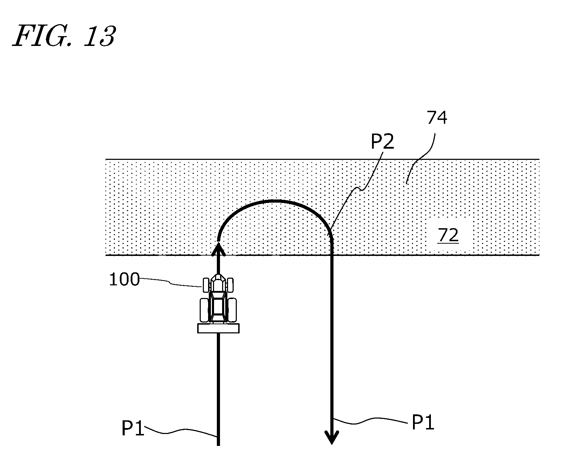

The region scanned by the LiDAR sensor(s) **140** (i.e., the region to be sensed for detecting an obstacle candidate) may be set depending on the location or the environment in which the work vehicle **100** travels. For example, when the work vehicle **100** travels straight on a road inside or outside a field, the front of the work vehicle **100** may be sensed mainly, as in the example shown in FIG. **12A****.** FIG. **13** schematically shows another example of the work vehicle **100** traveling by using the obstacle detection system. FIG. **13** shows an enlarged view of the region enclosed by the dotted line in FIG. **7****,** where the work vehicle **100** is automatically traveling in the field. For example, as in the example shown in FIG. **13****,** when the work vehicle **100** is traveling along a target path in the field and is about to travel along a turning path **P2** from the work area **72** to a headland **74,** it is preferable to use the LiDAR sensors **140a to 140d** to sense the front, rear, left and right of the work vehicle **100.** In FIG. **13****,** the sensing regions by the LiDAR sensors **140a to 140d** are schematically shown in gray fan shapes.

Although the work vehicle **100** is illustrated as performing self-driving while sensing the surrounding environment with the LiDAR sensor (s) **140** and the camera (s) **120** which the work vehicle **100** includes, this is not a limitation. The work vehicle **100** may perform self-driving while sensing the surrounding environment with a LiDAR sensor (s) and a camera (s) which are included in any other movable unit, such as an agricultural machine that is distinct from the work vehicle **100,** or a drone (Unmanned Aerial Vehicle: UAV). In that case, the controller **180** may function as an obstacle detection system that works in cooperation with the LiDAR sensor(s) and camera(s) included in the other movable unit. In cooperation with the other movable unit, the work vehicle **100** may perform self - driving and agricultural work by using the obstacle detection system.

In this example described here, the controller **180** functions as a controller of an obstacle detection system. A plurality of ECUs included in the controller **180** may cooperate with each other to perform the processes. The controller **180** may further include ECUs to perform a portion of, or the entirety of, the processes for detecting obstacles in addition to the exemplified ECUs **181 to 186.** However, a portion of, or the entirety of the processes performed by the controller **180** in the obstacle detection system may be performed by other devices. Such other devices may be any of the management device **600** (the processor **660),** the terminal device **400** (the processor **460**), and the operational terminal **200.** For example, when a portion of the processes performed by the controller **180** are performed by the processor **660** of the management device **600,** the combination of the controller **180** and the management device **600** functions as a controller of the obstacle detection system.

In one embodiment, "determining whether or not to change the traveling status of the work vehicle **100"** means that the controller **180** and/or the other device(s) mentioned above perform processes using the image(s) of the obstacle candidate acquired with the camera (s) **120** in order to determine whether or not to change the traveling status of the work vehicle **100.** More specifically, the device itself determines whether or not to change the traveling status of the work vehicle **100** by using image recognition techniques such as object detection. Known algorithms may be used for object detection. In another embodiment, the image(s) of the obstacle candidate acquired with the camera(s) **120** is transmitted to an external device (e.g., a computer remotely monitoring the work vehicle **100**), and it may be determined whether or not to change the traveling status of the work vehicle **100** based on a signal regarding whether or not to change the traveling status of the work vehicle **100** that is received from the external device. For example, a user who has examined the image(s) of the obstacle candidate acquired with the camera(s) **120** may input to the external device a signal regarding whether or not to change the traveling status of the work vehicle **100.**

The obstacle detection system according to the present embodiment may be used while the work vehicle **100** is automatically traveling in the field or on a road outside the field (a general road or an agricultural road). The work vehicle **100** automatically travels on a road inside or outside the field along the target path, for example. At this time, possible obstacles for which the work vehicle **100** should change its traveling status in order to avoid collision or contact may include, for example: what is inside the field, e.g., animals or persons entering the field, persons working in the field, other agricultural machines traveling in the field, and trees in the field; and, as for roads outside the field (especially agricultural roads), for example, persons or other agricultural machines traveling on the roads, animals or trees existing on the roads, and the like. The controller **180** detects any object higher than a predetermined height as an obstacle candidate based on data that is output from the LiDAR sensor(s) **140** while the work vehicle **100** is traveling inside the field or on an agricultural road. The predetermined height may be set based on the type or characteristics (e.g., height, weight, horsepower, etc.) of the work vehicle **100** (inclusive of, when the work vehicle **100** has an implement attached thereto, that implement as well). The predetermined height may be changed depending on whether the work vehicle **100** is traveling inside the field or outside the field.

Among the examples of obstacles mentioned above, the appearance of persons or animals is often particularly difficult to predict. Therefore, the controller **180** may be configured to identify the type of the object assumed as an obstacle candidate based on the image of the obstacle candidate acquired with the camera(s) **120,** and if the obstacle candidate is a person or an animal, cause the work vehicle **100** to stop traveling or change the target path of the work vehicle **100** so as to avoid the obstacle candidate. Grass (e.g., weeds) or trees may also be overgrown in the field or on roads outside the field (especially agricultural roads). For example, vegetation fluttering in the wind may momentarily intrude into the region scanned by the LiDAR sensor (s) **140** and be detected as obstacle candidates by the LiDAR sensor (s) **140,** although by nature this is not something that should change the traveling status of the work vehicle **100.** By first identifying whether the obstacle candidate is vegetation, the processing load for obstacle detection can be further reduced. The controller **180** may identify the type of the object assumed to be an obstacle candidate based on RGB values of a color image(s) of the obstacle candidate acquired with the camera(s) **120,** for example. The controller **180** may identify whether the obstacle candidate is vegetation or not by detecting green pixels using the RGB values of the color image data of the obstacle candidate. For example, the controller **180** may detect leaves of vegetation by detecting green pixels from the color image data containing the obstacle candidate and exclude the green pixels from the subject of recognition processing.

The controller **180** may cause the work vehicle **100** to stop traveling or to decelerate upon detecting the obstacle candidate as a trigger. That is, the controller **180** may cause the work vehicle **100** to stop traveling or to decelerate at the time when an obstacle candidate is detected, before even determining whether or not to change the traveling status of the work vehicle **100.** After determining that the traveling status of the work vehicle **100** is not to be changed, the controller **180** cause the work vehicle **100** to resume traveling or to accelerate.

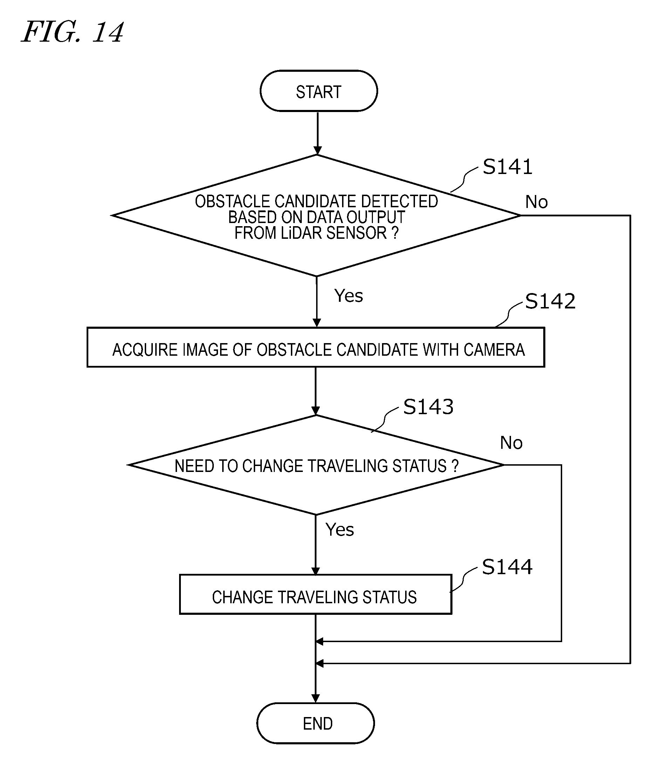

FIG. **14** is a flowchart showing an example of steps by which the controller **180** detects obstacles.

In step **S141,** an obstacle candidate is detected based on the data that is output from the LiDAR sensor(s) **140.** The controller **180** detects the obstacle candidate referring to, for example, the environment map and/or the target path in addition to the data that is output from the LiDAR sensor(s) **140.** The controller **180** may further obtain, based on the data that is output from the LiDAR sensor(s) **140,** a distance between the detected obstacle candidate and the work vehicle **100,** a positional relationship between the detected obstacle candidate and the work vehicle **100,** and so on.

In step **S142,** the camera(s) **120** acquires the image of the obstacle candidate, upon detecting the obstacle candidate in step **S141** as a trigger. Note that the work vehicle **100** is traveling while sensing the surrounding environment with the camera(s) **120** (e.g., capturing the surrounding environment with the camera(s) **120),** even the detection of the obstacle candidate. For example, when an obstacle candidate is detected, the controller **180** may cause the camera(s) **120** to capture the obstacle candidate at a higher magnification than that of the image (s) of the surrounding environment captured with the camera(s) **120** before the detection of the obstacle candidate. The controller **180** may perform the below process before causing the camera(s) **120** to capture an image(s) of the obstacle candidate. For example, when the obstacle candidate is detected, it may be detected whether the obstacle candidate is included in the field of view of a camera **120** or not, and if the obstacle candidate is not included in the field of view of the camera **120,** the orientation of the camera **120** may be changed so that the field of view of the camera **120** includes the obstacle candidate.

Alternatively, when the obstacle candidate is detected, before causing the camera(s) **120** to acquire the image(s) of the obstacle candidate, the controller **180** may turn on the lighting device **230** to illuminate the surrounding environment of the work vehicle **100,** or increase the illuminance of the lighting device **230.** The work vehicle **100** may further include one or more illuminance sensors. The controller **180,** by judging whether or not a measurement value(s) of the illuminance measured by the illuminance sensor (s) of the work vehicle **100** is lower than or equal to a threshold, and if the measurement value(s) is lower than or equal to the threshold, may turn on the lighting device **230** or increase the illuminance of the lighting device **230.** By turning on the lighting device **230** or increasing the illuminance of the lighting device **230,** clearer images of the obstacle candidate can be obtained; and furthermore, it allows images of the obstacle candidate to be captured even at nighttime, for example. The controller **180** may change the orientation of the lighting device **230** so that the lighting device **230** illuminates the detected obstacle candidate.

In step **S143,** it is determined whether or not to change the traveling status of the work vehicle **100** based on the image(s) acquired with the camera(s) **120** in step **S142.** In determining whether or not to change the traveling status of the work vehicle **100,** the controller **180** may use one, or a combination, of factors including: the type of the detected obstacle candidate; the distance between the obstacle candidate and the work vehicle **100;** the positional relationship between the obstacle candidate and the work vehicle **100;** the size of the obstacle candidate; the speed and other traveling status of the work vehicle at the time the obstacle candidate is detected; and so on. The conditions for determining whether or not to change the traveling status of the work vehicle **100** may be varied depending on whether the work vehicle **100** is traveling in the field, on an agricultural road outside the field, or on a general road outside the field.

If it is determined in step **S143** that the traveling status of the work vehicle **100** is to be changed, the traveling status of the work vehicle **100** is changed at step **S144.** If it is determined in step **S143** that the traveling status of the work vehicle **100** is not to be changed, it ends without changing the traveling status of the work vehicle **100.**

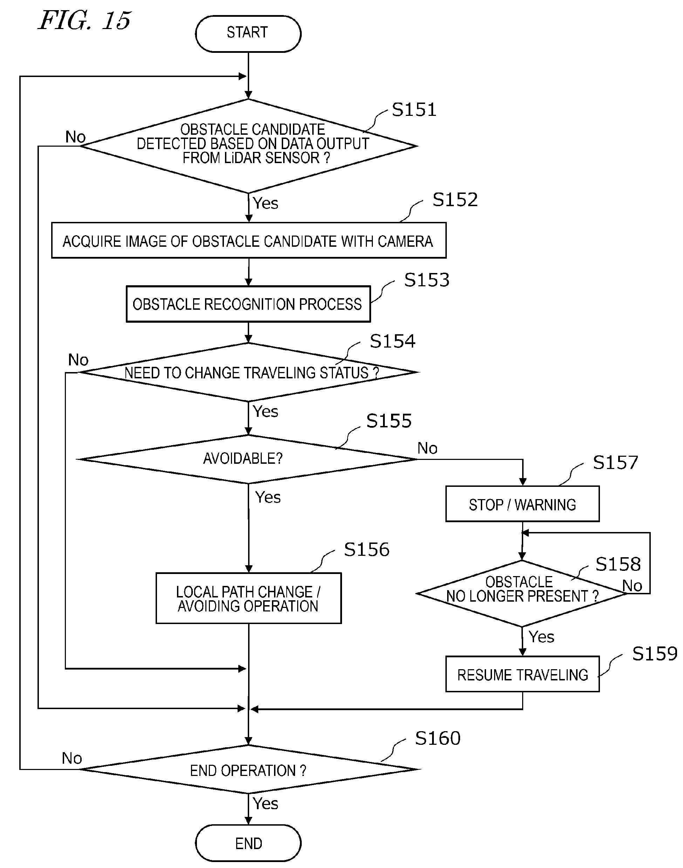

FIG. **15** is a flowchart showing another example of steps by which the controller **180** detects obstacles. Differences from the example of FIG. **14** are mainly explained below.

The controller **180,** when an obstacle candidate is detected based on the data that is output from the LiDAR sensor(s) **140** (step **S151),** acquires an image(s) of the obstacle candidate by the camera(s) **120** (step **S152**). The controller **180** performs the obstacle recognition process by using the image (s) acquired with the camera (s) **120** (step **S153**) and determines whether or not to change the traveling status of the work vehicle **100(step S154**).

When it is determined that the traveling status of the work vehicle **100** is to be changed for avoiding the detected obstacle candidate, the ECU **185** determines whether a detour path that allows for avoiding the obstacle is generable (step **S155**). For example, as in the example of FIG. **12C****,** if the road traveled by the work vehicle **100** has any space available for detouring, it is determined that a detour path is generable. While the work vehicle **100** is traveling in the field, for example, if a detouring path that does not affect the agricultural work and crops is generable, it is determined that a detour path is generable. For example, if the work vehicle **100** is traveling while performing any agricultural work for which the generation of a detour path is prohibited in advance, or if detouring may result in a contact between the work vehicle **100** and the crops, it is determined that a detour path is not generable. For example, if it is possible to generate a detour path such that the detour path does not enter the already worked area in the field, it is determined that a detour path is generable.

When it is determined that a detour path is generable, the ECU **185** generates the detour path by changing the local path so as to avoid the obstacle, and the controller **180** causes the work vehicle **100** to travel along the detour path (step **S156**). When it is determined that a detour path is not generable, the controller **180** causes the work vehicle **100** to stop (step **S157**). In parallel, the controller **180** may perform the generation of a warning sound from the buzzer **220,** and the transmission of a warning signal to the terminal device **400.** If the object that is detected as an obstacle (e.g., a movable obstacle such as a person or animal) has moved, or the worker has removed the obstacle so that the obstacle is determined as no longer present (step **S158**), and the controller **180** causes the work vehicle **100** to resume traveling (step **S159).** The controller **180** repeats the operations of steps **S151 to S159** until a command to end the operation is issued.

### INDUSTRIAL APPLICABILITY

The present techniques according to the present disclosure are applicable to obstacle detection systems for agricultural machines such as tractors, harvesters, rice transplanters, vehicles for crop management, vegetable transplanters, mowers, seeders, spreaders, or agricultural robots.

### REFERENCE SINGS LIST

**40:** obstacle, **50:** GNSS satellite; **60:** reference station; **70:** field; **72:** work area; **74:** headland; **76:** road; **80:** network; **100:** work vehicle; **101:** vehicle body; **102:** prime mover (engine); **103:** transmission; **104:** wheel; **105:** cabin; **106:** steering device; **107:** driver's seat; **108:** linkage; **110:** positioning device (GNSS unit); **111:** GNSS receiver; **112:** RTK receiver; **115:** inertial measurement unit (IMU); **116:** processing circuit; **120:** camera; **130:** obstacle sensor; **140:** LiDAR sensor; **150:** sensors; **152:** steering wheel sensor; **154:** angle-of-turn sensor; **156:** axle sensor; **160:** control system; **170:** storage device; **180:** controller; **181-186:** ECU; **190:** communication device; **200:** operational terminal; **210:** operation switches; **220:** buzzer; **230:** lighting device; **240:** drive device; **300:** implement; **340:** drive device; **380:** controller; **390:** communication device; **400:** terminal device; **420:** input device; **430:** display device; **450:** storage device; **460:** processor; **470:** ROM; **480:** RAM; **490:** communication device; **600:** management device; **650:** storage device; **660:** processor; **670:** ROM; **680:** RAM; **690:** communication device

## Claims

1. An obstacle detection system for an agricultural machine (100) to perform self-driving while sensing a surrounding environment with a LiDAR sensor (140) and a camera (120), the obstacle detection system comprising:
a controller (180) configured to cause the camera (120) upon detecting an obstacle candidate (40) based on data that is output from the LiDAR sensor (140), as a trigger, to acquire an image of the obstacle candidate (40),
to determine whether or not to change a traveling status of the agricultural machine (100) based on the image of the obstacle candidate (40) acquired with the camera (120), and
to detect an object that is higher than a predetermined height as the obstacle candidate (40) based on data that is output from the LiDAR sensor (140) while the agricultural machine (100) is traveling in a field or on an agricultural road.

2. The obstacle detection system of claim 1, wherein the controller (180) is configured to:
detect an object within the surrounding environment based on data that is output from the LiDAR sensor (140), and
when the detected object is the obstacle candidate (40), cause the camera (120) to acquire the image of the obstacle candidate (40) and determines whether or not to change the traveling status of the agricultural machine (100) based on the image.

3. The obstacle detection system of claim 2, wherein the controller (180) is configured to:
identify, based on the image acquired with the camera (120), a type of the object that is the obstacle candidate (40), and
when the obstacle candidate (40) is a person or an animal, cause the agricultural machine (100) to stop traveling or to change a traveling path of the agricultural machine (100) so as to avoid the obstacle candidate (40).

4. The obstacle detection system of claim 2, wherein the controller (180) is configured to:
when the obstacle candidate (40) is detected, cause the camera (120) to acquire a color image of the obstacle candidate (40), and
identify, based on RGB values of the color image of the obstacle candidate (40), a type of the object that is the obstacle candidate (40).

5. The obstacle detection system of any one of claims 1 to 4, wherein the controller (180) is configured to:
transmit the image of the obstacle candidate (40) acquired with the camera (120) to an external device, and
based on a signal received from the external device indicating whether or not to change the traveling status of the agricultural machine (100), determine whether or not to change the traveling status of the agricultural machine (100).

6. The obstacle detection system of any one of claims 1 to 5, wherein the controller (180) is configured to cause the agricultural machine (100) to stop traveling or to decelerate upon detecting the obstacle candidate (40) as a trigger.

7. The obstacle detection system of claim 6, wherein the controller (180) is configured to cause the agricultural machine (100) to resume travel or to accelerate when determining not to change the traveling status of the agricultural machine (100).

8. The obstacle detection system of any one of claims 1 to 7, wherein the controller (180) is configured to:
cause the camera (120) to acquire an image of the surrounding environment before the obstacle candidate (40) is detected, and,
when the obstacle candidate (40) is detected, cause the camera (120) to capture the obstacle candidate (40) at a higher magnification than that of the image of the surrounding environment.

9. The obstacle detection system of any one of claims 1 to 8, wherein, if a field of view of the camera (120) does not include the obstacle candidate (40) when the obstacle candidate (40) is detected, the controller (180) is configured to change an orientation of the camera (120) so that the field of view of the camera (120) includes the obstacle candidate (40) when the obstacle candidate (40) is detected.

10. The obstacle detection system of any one of claims 1 to 9, wherein
the agricultural machine (100) comprises a lighting device (230) configured to illuminate the surrounding environment; and
the controller (180) is configured to turn on the lighting device (230) or increase an illuminance of the lighting device (230) when the obstacle candidate (40) is detected.

11. The obstacle detection system of claims 1 to 10, wherein,
the agricultural machine (100) is a tractor to which an implement is attachable; and,
when the tractor has an implement attached thereto, the controller (180) is configured to set, based on a type of the implement, a region to be scanned by the LiDAR sensor (140) while the agricultural machine (100) is traveling.

12. An agricultural machine (100) comprising the obstacle detection system of any one of claims 1 to 11, the LiDAR sensor (140), and the camera (120).

13. An obstacle detection method for an agricultural machine (100) to perform self-driving while sensing a surrounding environment with a LiDAR sensor (140) and a camera (120), the obstacle detection method comprising:
detecting an obstacle candidate (40) based on data that is output from the LiDAR sensor (140);
acquiring an image of the obstacle candidate (40) with the camera (120) upon detecting the obstacle candidate (40) as a trigger;
determining whether or not to change a traveling status of the agricultural machine (100) based on the image of the obstacle candidate (40) acquired with the camera (120); and
detecting an object that is higher than a predetermined height as the obstacle candidate (40) based on data that is output from the LiDAR sensor (140) while the agricultural machine (100) is traveling in a field or on an agricultural road.

## Patentansprüche

1. Hinderniserkennungssystem für eine landwirtschaftliche Maschine (100), um ein Selbstfahren durchzuführen, während eine umgebende Umgebung mit einem LiDAR-Sensor (140) und einer Kamera (120) erfasst wird, das Hinderniserkennungssystem umfassend:
eine Steuerung (180), die konfiguriert ist, um die Kamera (120) bei Erkennen eines Hinderniskandidaten (40) basierend auf Daten, die von dem LiDAR-Sensor (140) ausgegeben werden, als Auslöser zu veranlassen, ein Bild des Hinderniskandidaten (40) aufzunehmen,
basierend auf dem mit der Kamera (120) aufgenommenen Bild des Hinderniskandidaten (40), Bestimmen, ob ein Fahrzustand der landwirtschaftlichen Maschine (100) geändert werden soll, und
Erkennen eines Objekts, das höher ist als eine vorbestimmte Höhe, als Hinderniskandidat (40), basierend auf Daten, die von dem LiDAR-Sensor (140) ausgegeben werden, während die landwirtschaftliche Maschine (100) auf einem Feld oder auf einem landwirtschaftlichen Weg fährt.

2. Hinderniserkennungssystem nach Anspruch 1, wobei die Steuerung (180) zu Folgendem konfiguriert ist:
Erkennen eines Objekts in der umgebenden Umgebung basierend auf Daten, die von dem LiDAR-Sensor (140) ausgegeben werden, und
wenn das erkannte Objekt der Hinderniskandidat (40) ist, Veranlassen der Kamera (120), das Bild des Hinderniskandidaten (40) aufzunehmen, und basierend auf dem Bild Bestimmen, ob der Fahrzustand der landwirtschaftlichen Maschine (100) geändert werden soll.

3. Hinderniserkennungssystem nach Anspruch 2, wobei die Steuerung (180) zu Folgendem konfiguriert ist:
basierend auf dem mit der Kamera (120) aufgenommenen Bild, Identifizieren einer Art des Objekts, das der Hinderniskandidat (40) ist, und
wenn der Hinderniskandidat (40) eine Person oder ein Tier ist, Veranlassen der landwirtschaftlichen Maschine (100), die Fahrt anzuhalten oder einen Fahrweg der landwirtschaftlichen Maschine (100) zu ändern, um dem Hinderniskandidaten (40) auszuweichen.

4. Hinderniserkennungssystem nach Anspruch 2, wobei die Steuerung (180) zu Folgendem konfiguriert ist:
wenn der Hinderniskandidat (40) erkannt wird, Veranlassen der Kamera (120), ein Farbbild des Hinderniskandidaten (40) aufzunehmen, und
basierend auf RGB-Werten des Farbbilds des Hinderniskandidaten (40), Identifizieren einer Art des Objekts, das der Hinderniskandidat (40) ist.

5. Hinderniserkennungssystem nach einem der Ansprüche 1 bis 4, wobei die Steuerung (180) zu Folgendem konfiguriert ist:
Übertragen des mit der Kamera (120) aufgenommenen Bilds des Hinderniskandidaten (40) an eine externe Vorrichtung, und
basierend auf einem Signal, das von der externen Vorrichtung empfangen wird, das angibt, ob der Fahrzustand der landwirtschaftlichen Maschine (100) geändert werden soll, Bestimmen, ob der Fahrzustand der landwirtschaftlichen Maschine (100) geändert werden soll.

6. Hinderniserkennungssystem nach einem der Ansprüche 1 bis 5, wobei die Steuerung (180) konfiguriert ist, um die landwirtschaftliche Maschine (100) zu veranlassen, die Fahrt zu stoppen oder zu verzögern, wenn der Hinderniskandidat (40) als Auslöser erkannt wird.

7. Hinderniserkennungssystem nach Anspruch 6, wobei die Steuerung (180) konfiguriert ist, um die landwirtschaftliche Maschine (100) zu veranlassen, die Fahrt fortzusetzen oder zu beschleunigen, wenn bestimmt wird, den Fahrzustand der landwirtschaftlichen Maschine (100) nicht zu ändern.

8. Hinderniserkennungssystem nach einem der Ansprüche 1 bis 7, wobei die Steuerung (180) zu Folgendem konfiguriert ist:
Veranlassen der Umgebungskamera (120), ein Bild der Umgebung aufzunehmen, bevor der Hinderniskandidat (40) erkannt wird, und
wenn der Hinderniskandidat (40) erkannt wird, Veranlassen der Kamera (120), den Hinderniskandidaten (40) mit einer höheren Vergrößerung als die des Bilds der umgebenden Umgebung zu erfassen.

9. Hinderniserkennungssystem nach einem der Ansprüche 1 bis 8, wobei, falls ein Sichtfeld der Kamera (120) den Hinderniskandidaten (40) nicht beinhaltet, wenn der Hinderniskandidat (40) erkannt wird, die Steuerung (180) konfiguriert ist, um eine Ausrichtung der Kamera (120) zu ändern, sodass das Sichtfeld der Kamera (120) den Hinderniskandidaten (40) beinhaltet, wenn der Hinderniskandidat (40) erkannt wird.

10. Hinderniserkennungssystem nach einem der Ansprüche 1 bis 9, wobei
die landwirtschaftliche Maschine (100) eine Beleuchtungsvorrichtung (230) umfasst, die konfiguriert ist, um die umgebende Umgebung zu beleuchten; und
die Steuerung (180) konfiguriert ist, um die Beleuchtungsvorrichtung (230) einzuschalten oder eine Beleuchtungsstärke der Beleuchtungsvorrichtung (230) zu erhöhen, wenn der Hinderniskandidat (40) erkannt wird.

11. Hinderniserkennungssystem nach einem der Ansprüche 1 bis 10, wobei
die landwirtschaftliche Maschine (100) ein Traktor ist, an den ein Arbeitsgerät anbringbar ist; und,
wenn ein Arbeitsgerät an dem Traktor angebracht ist, die Steuerung (180) konfiguriert ist, um basierend auf einer Art des Arbeitsgeräts einen Bereich festzulegen, der von dem LiDAR-Sensor (140) abgetastet werden soll, während die landwirtschaftliche Maschine (100) fährt.

12. Landwirtschaftliche Maschine (100), umfassend das Hinderniserkennungssystem nach einem der Ansprüche 1 bis 11, den LiDAR-Sensor (140) und die Kamera (120).

13. Hinderniserkennungsverfahren für eine landwirtschaftliche Maschine (100), um ein Selbstfahren durchzuführen, während eine umgebende Umgebung mit einem LiDAR-Sensor (140) und einer Kamera (120) erfasst wird, das Hinderniserkennungsverfahren umfassend:
Erkennen eines Hinderniskandidaten (40) basierend auf Daten, die von dem LiDAR-Sensor (140) ausgegeben werden;
Erfassen eines Bilds des Hinderniskandidaten (40) mit der Kamera (120) bei Erkennen des Hinderniskandidaten (40) als Auslöser;
basierend auf dem mit der Kamera (120) aufgenommenen Bild des Hinderniskandidaten (40), Bestimmen, ob ein Fahrzustand der landwirtschaftlichen Maschine (100) geändert werden soll; und
Erkennen eines Objekts, das höher ist als eine vorbestimmte Höhe, als Hinderniskandidat (40), basierend auf Daten, die von dem LiDAR-Sensor (140) ausgegeben werden, während die landwirtschaftliche Maschine (100) auf einem Feld oder auf einem landwirtschaftlichen Weg fährt.

## Revendications

1. Système de détection d'obstacles pour permettre à une machine agricole (100) d'effectuer une conduite autonome tout en détectant un environnement à l'aide d'un capteur LiDAR (140) et d'une caméra (120), le système de détection d'obstacles comprenant :
un contrôleur (180) configuré pour amener la caméra (120), lors de la détection d'un obstacle candidat (40), sur la base de données qui sont fournies en sortie par le capteur LiDAR (140), en tant que déclencheur, à acquérir une image de l'obstacle candidat (40),
à déterminer s'il convient ou non de modifier un état de déplacement de la machine agricole (100) sur la base de l'image de l'obstacle candidat (40) acquise par la caméra (120), et
à détecter un objet, qui est situé plus haut qu'une hauteur prédéterminée, comme étant l'obstacle candidat (40), sur la base de données qui sont fournies en sortie par le capteur LiDAR (140) pendant que la machine agricole (100) se déplace dans un champ ou sur une route agricole.

2. Système de détection d'obstacles selon la revendication 1, dans lequel le contrôleur (180) est configuré pour :
détecter un objet dans l'environnement, sur la base de données qui sont fournies en sortie par le capteur LiDAR (140), et
lorsque l'objet détecté est l'obstacle candidat (40), amener la caméra (120) à acquérir l'image de l'obstacle candidat (40), et déterminer s'il convient ou non de modifier l'état de déplacement de la machine agricole (100) sur la base de l'image.

3. Système de détection d'obstacles selon la revendication 2, dans lequel le contrôleur (180) est configuré pour :
identifier, sur la base de l'image acquise par la caméra (120), un type de l'objet qui est l'obstacle candidat (40), et
lorsque l'obstacle candidat (40) est une personne ou un animal, amener la machine agricole (100) à interrompre le déplacement ou à modifier un trajet de déplacement de la machine agricole (100) afin d'éviter l'obstacle candidat (40).

4. Système de détection d'obstacles selon la revendication 2, dans lequel le contrôleur (180) est configuré pour :
lorsque l'obstacle candidat (40) est détecté, amener la caméra (120) à acquérir une image couleur de l'obstacle candidat (40), et
identifier, sur la base de valeurs RGB de l'image couleur de l'obstacle candidat (40), un type de l'objet qui est l'obstacle candidat (40).

5. Système de détection d'obstacles selon l'une quelconque des revendications 1 à 4, dans lequel le contrôleur (180) est configuré pour :
transmettre l'image de l'obstacle candidat (40) acquise par la caméra (120) à un dispositif externe, et
sur la base d'un signal reçu en provenance du dispositif externe indiquant s'il convient ou non de modifier l'état de déplacement de la machine agricole (100), déterminer s'il convient ou non de modifier l'état de déplacement de la machine agricole (100).

6. Système de détection d'obstacles selon l'une quelconque des revendications 1 à 5, dans lequel le contrôleur (180) est configuré pour amener la machine agricole (100) à interrompre son déplacement ou à ralentir lors de la détection de l'obstacle candidat (40) en tant que déclencheur.

7. Système de détection d'obstacles selon la revendication 6, dans lequel le contrôleur (180) est configuré pour amener la machine agricole (100) à reprendre son déplacement ou à accélérer lorsqu'il est déterminé qu'il convient de ne pas modifier l'état de déplacement de la machine agricole (100).

8. Système de détection d'obstacles selon l'une quelconque des revendications 1 à 7, dans lequel le contrôleur (180) est configuré pour :
amener la caméra (120) à acquérir une image de l'environnement avant que l'obstacle candidat (40) ne soit détecté, et,
lorsque l'obstacle candidat (40) est détecté, amener la caméra (120) à capturer l'obstacle candidat (40) avec un grossissement supérieur à celui de l'image de l'environnement.

9. Système de détection d'obstacles selon l'une quelconque des revendications 1 à 8, dans lequel, si le champ de vision de la caméra (120) n'inclut pas l'obstacle candidat (40) lorsque l'obstacle candidat (40) est détecté, le contrôleur (180) est configuré pour modifier une orientation de la caméra (120) de sorte que le champ de vision de la caméra (120) inclut l'obstacle candidat (40) lorsque l'obstacle candidat (40) est détecté.

10. Système de détection d'obstacles selon l'une quelconque des revendications 1 à 9, dans lequel
la machine agricole (100) comprend un dispositif d'éclairage (230) configuré pour éclairer l'environnement ; et
le contrôleur (180) est configuré pour activer le dispositif d'éclairage (230) ou pour augmenter l'éclairement du dispositif d'éclairage (230) lorsque l'obstacle candidat (40) est détecté.

11. Système de détection d'obstacles selon l'une quelconque des revendications 1 à 10, dans lequel
la machine agricole (100) est un tracteur auquel un outil peut être fixé ; et
lorsque le tracteur a un outil qui lui est fixé, le contrôleur (180) est configuré pour définir, en fonction d'un type de l'outil, une zone à balayer par le capteur LiDAR (140) pendant que la machine agricole (100) se déplace.

12. Machine agricole (100) comprenant le système de détection d'obstacles selon l'une quelconque des revendications 1 à 11, le capteur LiDAR (140) et la caméra (120).

13. Procédé de détection d'obstacles pour permettre à une machine agricole (100) d'effectuer une conduite autonome tout en détectant un environnement à l'aide d'un capteur LiDAR (140) et d'une caméra (120), le procédé de détection d'obstacles comprenant le fait de :
détecter un obstacle candidat (40) sur la base de données qui sont fournies en sortie par le capteur LiDAR (140) ;
acquérir une image de l'obstacle candidat (40) à l'aide de la caméra (120) lors de la détection de l'obstacle candidat (40) en tant que déclencheur ;
déterminer s'il convient ou non de modifier un état de déplacement de la machine agricole (100) sur la base de l'image de l'obstacle candidat (40) acquise par la caméra (120) ; et
détecter un objet, qui est situé plus haut qu'une hauteur prédéterminée, comme étant l'obstacle candidat (40), sur la base de données qui sont fournies en sortie par le capteur LiDAR (140) pendant que la machine agricole (100) se déplace dans un champ ou sur une route agricole.
